(19) Europäisches Patentamt
European Patent Office
Office européen des brevets

(11) **EP 2 385 620 A2**

(12) **EUROPÄISCHE PATENTANMELDUNG**

(43) Veröffentlichungstag:
**09.11.2011 Patentblatt 2011/45**

(51) Int Cl.:
*H02P 9/00* [(2006.01)]  *H02P 29/00* [(2006.01)]

(21) Anmeldenummer: **11160569.7**

(22) Anmeldetag: **31.03.2011**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **03.05.2010 DE 102010028497**

(71) Anmelder: **SIEMENS AKTIENGESELLSCHAFT
80333 München (DE)**

(72) Erfinder:
• **Kraus, Thomas
91341, Röttenbach (DE)**
• **Bartzik, Alexander
91330, Eggolsheim (DE)**
• **Kartes, Jürgen
91058 Erlangen (DE)**

(54) **Betriebsverfahren und Stromversorgungseinrichtung für eine fremderregte bürstenlose Synchronmaschine**

(57)    Sowohl in einem Normalbetrieb als auch in einem Notbetrieb einer fremderregten bürstenlosen Synchronmaschine (1) wird in deren Ständerwicklung (6) elektrische Energie eingespeist. Im Normalbetrieb wird in eine Erregerwicklung (11) der Synchronmaschine (1) über eine von einer Steuereinrichtung (13) gesteuerte Erregerversorgungseinrichtung (4) elektrische Energie eingespeist. Bei einem Ausfall der Erregerversorgungseinrichtung (4) wird automatisch die Erregerversorgungseinrichtung (4) von der Erregerwicklung (11) abgeschaltet und zur Aufrechterhaltung des Notbetriebs eine Notversorgungseinrichtung (5) an die Erregerwicklung (11) angeschaltet. Von der Notversorgungseinrichtung (5) wird ungesteuert elektrische Energie in die Erregerwicklung (11) eingespeist. Zum Übergang vom Notbetrieb in den Normalbetrieb wird während des Einspeisens der elektrischen Energie in die Ständerwicklung (6) zunächst von der Steuereinrichtung (13) die Erregerversorgungseinrichtung (4) entsprechend der Einspeisung der Notversorgungseinrichtung (5) angesteuert. Sodann wird die Notversorgungseinrichtung (5) von der Erregerwicklung (11) abgeschaltet und die Erregerversorgungseinrichtung (4) an die Erregerwicklung (11) angeschaltet.

FIG 1

$$U = U0 \dots U0 + \Delta U$$

$$U0 + 2/3\Delta U \leq U' \leq U0 + \Delta U$$

EP 2 385 620 A2

## Beschreibung

Die vorliegende Erfindung betrifft ein Betriebsverfahren für eine fremderregte bürstenlose Synchronmaschine,

- wobei sowohl in einem Normalbetrieb als auch in einem Notbetrieb der Synchronmaschine in eine Ständerwicklung der Synchronmaschine über eine Ständerspeisung elektrische Energie eingespeist wird,
- wobei im Normalbetrieb in eine Erregerwicklung der Synchronmaschine über eine von einer Steuereinrichtung gesteuerte Erregerversorgungseinrichtung elektrische Energie eingespeist wird,
- wobei bei einem Ausfall der Erregerversorgungseinrichtung mittels einer Schalteinrichtung automatisch die Erregerversorgungseinrichtung von der Erregerwicklung abgeschaltet wird und zur Aufrechterhaltung des Notbetriebs eine Notversorgungseinrichtung an die Erregerwicklung angeschaltet wird, von der ungesteuert elektrische Energie in die Erregerwicklung eingespeist wird.

Die vorliegende Erfindung betrifft weiterhin eine Stromversorgungseinrichtung für eine fremderregte bürstenlose Synchronmaschine,

- wobei die Stromversorgungseinrichtung eine Ständerspeisung aufweist, die zum Einspeisen von elektrischer Energie in eine Ständerwicklung der Synchronmaschine an die Ständerwicklung anschaltbar ist,
- wobei die Stromversorgungseinrichtung eine Erregerversorgungseinrichtung aufweist, die zum Einspeisen von elektrischer Energie in eine Erregerwicklung der Synchronmaschine über eine Schalteinrichtung an die Erregerwicklung anschaltbar ist,
- wobei die Stromversorgungseinrichtung eine Notversorgungseinrichtung aufweist, die zum Einspeisen von elektrischer Energie in die Erregerwicklung über die Schalteinrichtung an die Erregerwicklung anschaltbar ist,
- wobei der Erregerversorgungseinrichtung zu deren Steuerung eine Steuereinrichtung zugeordnet ist und der Notversorgungseinrichtung keine Steuereinrichtung zugeordnet ist,
- wobei die Schalteinrichtung derart ausgebildet ist, dass sie bei einem Ausfall der Erregerversorgungseinrichtung automatisch die Erregerversorgungseinrichtung von der Erregerwicklung abschaltet und zur Aufrechterhaltung eines Notbetriebs der Synchronmaschine die Notversorgungseinrichtung an die Erregerwicklung anschaltet.

Synchronmaschinen werden in verschiedenen Anwendungsgebieten als wichtige, prozessrelevante Hauptantriebe eingesetzt. Der Leistungsbereich der Synchronmaschinen reicht teilweise bis über 60 Megawatt.

Eine Schwachstelle der Synchronmaschine ist ihre Erregung, das heißt ihre kontinuierliche Versorgung mit Erregerstrom, also dem in die Erregerwicklung (genauer: die Ständerwicklung der Erregermaschine) eingespeisten Strom. Der Erregerstrom kann - je nach Art der Erregermaschine - Gleichstrom oder Drehstrom sein.

Im Normalbetrieb der Synchronmaschine wird der Erregerstrom geregelt, um beispielsweise den Wirkungsgrad der Synchronmaschine zu optimieren oder um zu gewährleisten, dass das von der Synchronmaschine abgegebene Drehmoment groß genug ist. Diese Regelung wird durch eine Steuereinrichtung der Erregerversorgungseinrichtung bewirkt.

Bei einem Ausfall der Erregerversorgungseinrichtung - sei es wegen Abschaltens oder Ausfall der Speisung der Erregerversorgungseinrichtung, sei es wegen Abschaltens oder Ausfall der Steuereinrichtung, sei es wegen eines Ausfalls der Erregerversorgungseinrichtung selbst - wird in der Regel der Betrieb der Synchronmaschine unterbrochen. Produktionsausfälle und/oder andere Störungen sind die Folge.

Für gleichstromerregte Synchronmaschinen ist im Stand der Technik bekannt, mittels einer Batterie oder einer anderen geeigneten Gleichstromquelle eine Notversorgung für die Erregerwicklung der Synchronmaschine zu realisieren. Bei drehstromerregten Synchronmaschinen ist diese Vorgehensweise jedoch nicht anwendbar.

Wenn bei einer gleichstromerregten Synchronmaschine ein Notbetrieb aufrechterhalten wird, wird der Betrieb der Synchronmaschine zwar nicht zum Zeitpunkt des Ausfalls der Erregerversorgungseinrichtung unterbrochen. Es soll jedoch (selbstverständlich) zu einem späteren Zeitpunkt wieder der Normalbetrieb aufgenommen werden. Hierfür ist im Stand der Technik lediglich bekannt, die Synchronmaschine, ausgehend vom Notbetrieb, still zu setzen und sie sodann, nunmehr im Normalbetrieb, wieder anzufahren. Ein zumindest kurzzeitiger Stillstand der Synchronmaschine ist somit im Stand der Technik unvermeidlich.

Die Aufgabe der vorliegenden Erfindung besteht darin, Möglichkeiten zu schaffen, die Synchronmaschine ohne Stillstand der Synchronmaschine vom Notbetrieb in den Normalbetrieb überführen zu können.

Die Aufgabe wird durch ein Betriebsverfahren für eine fremderregte bürstenlose Synchronmaschine mit den Merkmalen des Anspruchs 1 gelöst. Vorteilhafte Ausgestaltungen des erfindungsgemäßen Betriebsverfahrens sind Gegenstand der abhängigen Ansprüche 2 bis 6.

Erfindungsgemäß ist vorgesehen, ein Betriebsverfahren der eingangs genannten Art dadurch auszugestalten, dass zum Übergang vom Notbetrieb in den Normalbetrieb während des Einspeisens der elektrischen Energie in die Ständerwicklung zunächst von der Steuereinrichtung die Erregerversorgungseinrichtung entsprechend der Einspeisung der Notversorgungseinrichtung angesteuert wird und sodann mittels der Schalteinrichtung die Notversorgungseinrichtung von der Erregerwicklung abgeschaltet wird und die Erregerversorgungseinrichtung an die Erregerwicklung angeschaltet wird.

Vorzugsweise ist vorgesehen, dass die Notversorgungseinrichtung aus der Ständerspeisung gespeist wird und die Spannung der Ständerspeisung auf eine von der Erregerversorgungseinrichtung in die Erregerwicklung einspeisbare Spannung umsetzt. Durch diese Ausgestaltung ist auf einfache Weise eine Notversorgung zu gewährleisten, ohne eine separate, zusätzliche Energieversorgung realisieren zu müssen.

Vorzugsweise ist vorgesehen, dass die Notversorgungseinrichtung beim Ausfall der Erregerversorgungseinrichtung automatisch an die Ständerspeisung angeschaltet wird und beim Übergang vom Notbetrieb in den Normalbetrieb automatisch von der Ständerspeisung abgeschaltet wird. Dadurch wird erreicht, dass im Normalbetrieb die Notversorgungseinrichtung völlig unbelastet bleibt.

Die Spannung der Ständerspeisung ist bei großen Synchronmaschinen in der Regel eine so genannte Mittelspannung (ca. 5 kV bis ca. 14 kV, in der Regel beispielsweise 6 kV, 11 kV oder 13,8 kV). Die Spannung zum Versorgen der Erregerwicklung ist hingegen in der Regel eine Niederspannung (unter 1 kV). Meist liegen die Spannungen zum Versorgen der Erregerwicklung im Bereich unter 400 V, teilweise sogar unter 100 V. In einer möglichen Ausgestaltung der vorliegenden Erfindung ist daher vorgesehen, dass die Notversorgungseinrichtung die Spannung der Ständerspeisung mittels eines Transformators auf die von der Erregerversorgungseinrichtung in die Erregerwicklung einspeisbare Spannung umsetzt.

Es ist möglich, das Umschalten vom Notbetrieb in den Normalbetrieb automatisch durchzuführen, sobald die entsprechende Bereitschaft hergestellt ist. Vorzugsweise ist jedoch vorgesehen, dass das Umschalten vom Notbetrieb in den Normalbetrieb von einem Benutzer durch die Eingabe eines entsprechenden Schaltbefehls ausgelöst wird.

Vorzugsweise ist vorgesehen, dass die von der Notversorgungseinrichtung abgegebene Spannung im oberen Drittel der von der Erregerversorgungseinrichtung in die Erregerwicklung einspeisbaren Spannungen liegt. Dadurch wird erreicht, dass auch im Notbetrieb unabhängig vom konkreten Belastungszustand der Synchronmaschine mit hoher Wahrscheinlichkeit ein störungsfreier Betrieb gewährleistet ist. Je höher die von der Notversorgungseinrichtung abgegebene Spannung ist, desto sicherer ist der störungsfreie Betrieb gewährleistet.

Die Aufgabe wird weiterhin durch eine Stromversorgungseinrichtung für eine fremderregte bürstenlose Synchronmaschine mit den Merkmalen des Anspruchs 7 gelöst. Vorteilhafte Ausgestaltungen der erfindungsgemäßen Stromversorgungseinrichtung sind Gegenstand der abhängigen Ansprüche 8 bis 12.

Erfindungsgemäß ist vorgesehen, eine Stromversorgungseinrichtung der eingangs genannten Art dadurch auszugestalten,

- dass die Steuereinrichtung derart ausgebildet ist, dass sie im Notbetrieb während des Einspeisens der elektrischen Energie in die Ständerwicklung zunächst die Erregerversorgungseinrichtung entsprechend der Einspeisung der Notversorgungseinrichtung ansteuert, und
- dass die Schalteinrichtung derart ausgebildet ist, dass sie sodann die Notversorgungseinrichtung von der Erregerwicklung abschaltet und die Erregerversorgungseinrichtung an die Erregerwicklung anschaltet.

Die vorteilhaften Ausgestaltungen der Stromversorgungseinrichtung entsprechen im Wesentlichen vorrichtungstechnischen Merkmalen der vorteilhaften Ausgestaltungen des erfindungsgemäßen Betriebsverfahrens.

Weitere Vorteile und Einzelheiten ergeben sich aus der nachfolgenden Beschreibung von Ausführungsbeispielen in Verbindung mit den Zeichnungen. Dabei zeigen in Prinzipdarstellung

FIG 1     eine Synchronmaschine und deren Stromversorgungseinrichtung,
FIG 2     ein Ablaufdiagramm und
FIG 3     eine weitere Synchronmaschine und deren Stromversorgungseinrichtung.

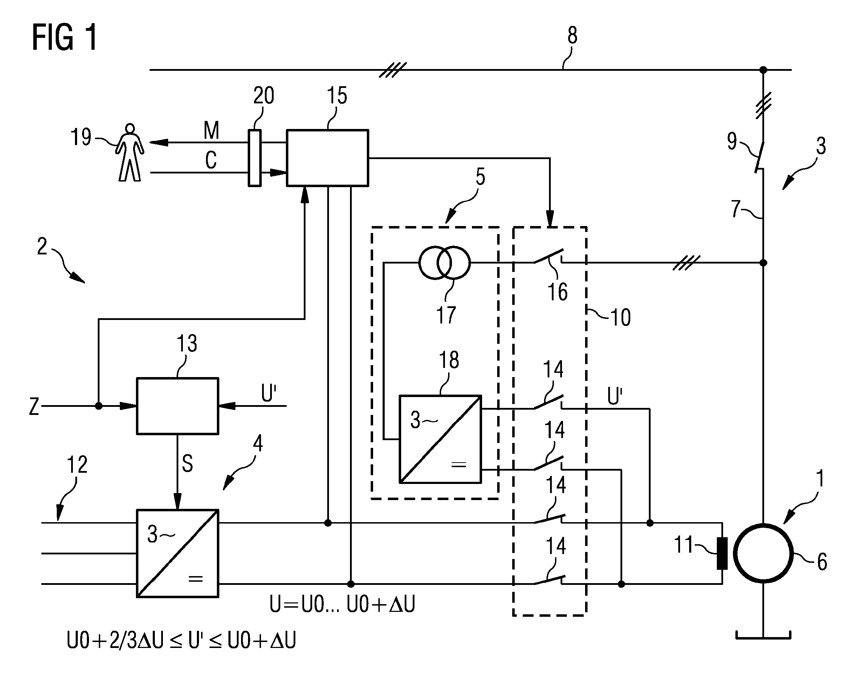

Gemäß FIG 1 wird eine fremderregte bürstenlose Synchronmaschine 1 mittels einer Stromversorgungseinrichtung 2 mit elektrischer Energie versorgt. Zu diesem Zweckt weist die Stromversorgungseinrichtung 2 eine Ständerspeisung 3, eine Erregerversorgungseinrichtung 4 und eine Notversorgungseinrichtung 5 auf.

Über die Ständerspeisung 3 wird in eine Ständerwicklung 6 der Synchronmaschine 1 elektrische Energie eingespeist. Dies gilt unabhängig davon, ob die Synchronmaschine 1 in einem Normalbetrieb oder in einem Notbetrieb betrieben wird. Die Begriffe "Normalbetrieb" und "Notbetrieb" werden später näher erläutert werden.

Die Ständerspeisung 3 besteht im einfachsten Fall aus entsprechenden Leitungen 7, die mit einem geeigneten Drehstromnetz 8 verbunden sind. In der Regel ist weiterhin ein Schalter 9 vorhanden, mittels dessen die Ständerwicklung 6 an das Drehstromnetz 8 anschaltbar und von ihm trennbar ist.

Eine Nennspannung des Drehstromnetzes 8 liegt bei großen Synchronmaschinen 1 im Mittelspannungsbereich, beispielsweise zwischen 5 kV und 14 kV. Übliche Nennspannungen sind in der Regel 6 kV, 10 kV, 11 kV und 13,8 kV.

Die Erregerversorgungseinrichtung 4 und die Notversorgungseinrichtung 5 sind über eine Schalteinrichtung 10 an eine Erregerwicklung 11 der Synchronmaschine 1 anschaltbar. Im Normalbetrieb der Synchronmaschine 1 ist die Erregerversorgungseinrichtung 4 an die Erregerwicklung 11 angeschaltet, die Notversorgungseinrichtung 5 ist in diesem Betriebszustand von der Erregerwicklung 11 abgeschaltet. Im Notbetrieb ist es umgekehrt.

Sowohl die Erregerversorgungseinrichtung 4 als auch die Notversorgungseinrichtung 5 dienen dazu, in die Erregerwicklung 11 der Synchronmaschine 1 elektrische Energie einzuspeisen. Spannungen U, U', mit welchen die Erregerwicklung 11 beaufschlagt wird, liegen in der Regel weit unter 1 kV, beispielsweise zwischen 50 V und 400 V. Insbesondere bei einer gleichstromerregten Synchronmaschine 1 sind relativ niedrige Spannungen U, U' sind möglich, beispielsweise 60 V bis 100 V. Selbstverständlich sind auch andere Werte möglich.

Wie bereits erwähnt, ist im Normalbetrieb die Erregerversorgungseinrichtung 4 an die Erregerwicklung 11 angeschaltet. Die Erregerversorgungseinrichtung 4 wird, um die Erregerwicklung 11 mit elektrischer Energie versorgen zu können, entsprechend gespeist. In der Regel erfolgt die Speisung über ein Niederspannungsnetz 12, das beispielsweise eine Nennspannung von 400 V oder in Einzelfällen auch eine höhere Nennspannung von beispielsweise 690 V aufweist. Die Speisung der Erregerversorgungseinrichtung 4 kann insbesondere (über einen nicht dargestellten Transformator) dem Drehstromnetz 8 entnommen werden, aus dem die Ständerwicklung 6 der Synchronmaschine 1 mit elektrischer Energie versorgt wird. Auch eine anderweitige Versorgung ist selbstverständlich möglich.

Die Erregerversorgungseinrichtung 4 ist eine gesteuerte Stromquelle. Der Erregerversorgungseinrichtung 4 ist daher eine Steuereinrichtung 13 zugeordnet, von der die Erregerversorgungseinrichtung 4 gesteuert wird. Der Steuereinrichtung 13 wird ein geeignetes Zustandssignal Z zugeführt, aus dem die Steuereinrichtung 13 einen Ansteuerzustand der Erregerversorgungseinrichtung 4 ableitet. Entsprechend dem ermittelten Ansteuerzustand der Erregerversorgungseinrichtung 4 gibt die Steuereinrichtung 13 entsprechende Steuersignale S an die Erregerversorgungseinrichtung 4 ab. Dementsprechend variiert beispielsweise die von der Erregerversorgungseinrichtung 4 abgegebene Spannung U zwischen einem Minimalwert $U0$ und einem Maximalwert $U0+\Delta U$. $\Delta U$ ist somit ein Spannungsbereich, innerhalb dessen die von der Erregerversorgungseinrichtung 4 abgegebene Spannung U schwanken kann.

Die Notversorgungseinrichtung 5 ist ungesteuert. Der Notversorgungseinrichtung 5 ist daher keine Steuereinrichtung zugeordnet. Weiterhin speist die Notversorgungseinrichtung 5 im Notbetrieb, in dem sie an die Erregerwicklung 11 angeschaltet ist, die von ihr abgegebene elektrische Energie ungesteuert in die Erregerwicklung 11 ein.

Der Normalbetrieb ist - wie schon der Name sagt - der Regelfall. Es kann jedoch geschehen, dass die Erregerversorgungseinrichtung 4 ausfällt, so dass der Normalbetrieb nicht mehr aufrechterhalten werden kann. Möglich Ursachen hierfür sind ein Ausfall (oder ein Abschalten) des Niederspannungsnetzes 12, ein Ausfall (oder ein Abschalten) der Steuereinrichtung 13 oder ein Fehler in der Erregerversorgungseinrichtung 4 selbst. Wenn die Erregerversorgungseinrichtung 4 ausfällt, wird mittels der Schalteinrichtung 10 automatisch die Erregerversorgungseinrichtung 4 von der Erregerwicklung 11 abgeschaltet. Gleichzeitig oder unmittelbar davor oder unmittelbar danach wird mittels der Schalteinrichtung 10 automatisch die Notversorgungseinrichtung 5 an die Erregerwicklung 11 angeschaltet. Dadurch kann ein Notbetrieb der Synchronmaschine 1 aufrechterhalten werden. Zum An- und Abschalten der Erregerversorgungseinrichtung 4 und der Notversorgungseinrichtung 5 weist die Schalteinrichtung 10 geeignete Schaltelemente 14 auf.

Um einen Ausfall der Erregerversorgungseinrichtung 4 erkennen zu können, kann der Schalteinrichtung 10 beispielsweise eine Auswertungseinrichtung 15 zugeordnet sein, der ebenfalls das Zustandssignal Z zugeführt wird. Der Auswertungseinrichtung 15 kann - beispielsweise - weiterhin die von der Erregerversorgungseinrichtung 4 abgegebene Spannung U zugeführt werden. Die Auswertungseinrichtung 15 kann beispielsweise anhand des Zustandssignal Z eine Sollspannung ermitteln, die von der Erregerversorgungseinrichtung 4 abgegeben werden sollte. Weicht die von der Erregerversorgungseinrichtung 4 abgegebene Spannung U zu weit von der Sollspannung ab, steuert die Auswertungseinrichtung 15 die Schalteinrichtung 10 an, so dass vom Normal- in den Notbetrieb umgeschaltet wird, die Erregerversorgungseinrichtung 4 also von der Erregerwicklung 11 abgeschaltet wird und die Notversorgungseinrichtung 5 an die Erregerwicklung 11 angeschaltet wird. Das Einspeisen von elektrischer Energie in die Ständerwicklung 6 bleibt von diesem Umschaltvorgang jedoch unbeeinflusst.

Wenn - ausgehend vom Notbetrieb - wieder in den Normalbetrieb übergegangen werden soll, wird zunächst die Steuereinrichtung 13 derart betrieben, dass sie die Erregerversorgungseinrichtung 4 entsprechend der Einspeisung der Notversorgungseinrichtung 5 ansteuert. Beispielsweise entspricht in diesem Zustand die von der Erregerversorgungseinrichtung 4 abgegebene Spannung U - innerhalb vorbestimmter Toleranzen - der von der Notversorgungseinrichtung 5 abgegebenen Spannung U'. Zu diesem Zeitpunkt ist (noch) die Notversorgungseinrichtung 5 an die Erregerwicklung 11 angeschaltet, nicht die Erregerversorgungseinrichtung 4. Das Ansteuern der Erregerversorgungseinrichtung 4 durch die Steuereinrichtung 13 erfolgt also im Notbetrieb der Synchronmaschine 1, in dem einerseits von der Notversorgungseinrichtung 5 in die Erregerwicklung 11 und andererseits von der Ständerspeisung 3 in die Ständerwicklung 6 elektrische Energie eingespeist wird.

Es ist möglich, dass der Zustand, in den die Erregerversorgungseinrichtung 4 durch die Steuereinrichtung 13 versetzt wird, fest vorgegeben ist. Alternativ ist es möglich, der Steuereinrichtung 13 Informationen über den Zustand der Notversorgungseinrichtung 5 zuzuführen, so dass die Steuereinrichtung 13 die Erregerversorgungseinrichtung 4 entsprechend steuern kann. Beispielsweise kann zu diesem Zweck der Steuereinrichtung 13 die von der Notversorgungseinrichtung 5 abgegebene Spannung U' zugeführt werden.

Wenn dieser Zustand erreicht ist, die Erregerversorgungseinrichtung 4 also beispielsweise die gewünschte Spannung U abgibt, wird sodann die Schalteinrichtung 10 umgeschaltet. Es wird also mittels der Schalteinrichtung 10 die Notversorgungseinrichtung 5 von der Erregerwicklung 11 abgeschaltet. Gleichzeitig oder unmittelbar davor oder unmittelbar danach wird die Erregerversorgungseinrichtung 4 an die Erregerwicklung 11 angeschaltet, so dass sich die Synchronmaschine 1 nunmehr wieder im Normalbetrieb befindet.

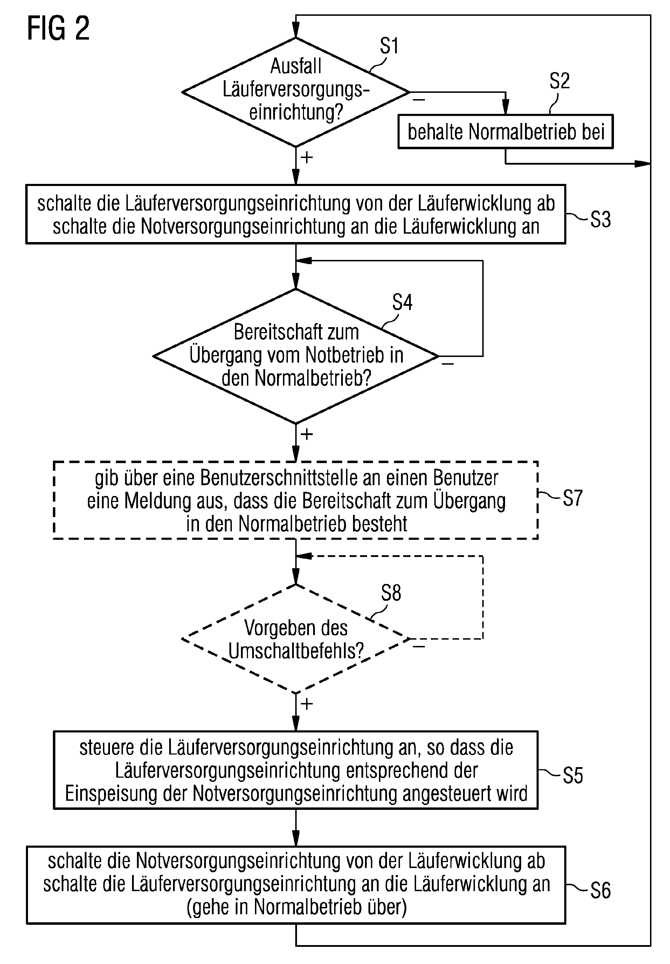

Der Betrieb der Synchronmaschine 1 wird nachfolgend nochmals in Verbindung mit FIG 2 kurz erläutert.

Die Synchronmaschine 1 befindet sich zunächst im Normalbetrieb. In diesem Betriebszustand wird in einem Schritt S1 geprüft, ob die Erregerversorgungseinrichtung 4 ausgefallen ist. Wenn dies nicht der Fall ist, wird in einem Schritt S2 der Normalbetrieb beibehalten. Die Erregerversorgungseinrichtung 4 wird von der Steuereinrichtung 13 angesteuert, die entsprechende Spannung U an die Erregerwicklung 11 ausgegeben.

Wenn hingegen ein Ausfall der Erregerversorgungseinrichtung 4 erkannt wird, wird in einem Schritt S3 die Erregerversorgungseinrichtung 4 von der Erregerwicklung 11 abgeschaltet, die Notversorgungseinrichtung 5 an die Erregerwicklung 11 angeschaltet. Es wird also vom Normalbetrieb in den Notbetrieb übergegangen.

In einem Schritt S4 wird überprüft, ob eine Bereitschaft zum Übergang vom Notbetrieb in den Normalbetrieb besteht. Der Schritt S4 wird wiederholt ausgeführt, bis die entsprechende Bereitschaft besteht.

In einem Schritt S5 steuert die Steuereinrichtung 13 die Erregerversorgungseinrichtung 4 an, so dass die Erregerversorgungseinrichtung 4 entsprechend der Einspeisung der Notversorgungseinrichtung 5 angesteuert wird. In einem Schritt S6 wird die Notversorgungseinrichtung 5 von der Erregerwicklung 11 abgeschaltet, die Erregerversorgungseinrichtung 4 an die Erregerwicklung 11 angeschaltet. Es wird also vom Notbetrieb in den Normalbetrieb übergegangen.

Das obenstehend erläuterte Grundprinzip der Erfindung kann auf verschiedene Art und Weise ausgestaltet werden. Die Ausgestaltungen werden nachfolgend in Verbindung mit den Figuren 1 und 2 näher erläutert. Die Ausgestaltungen sind unabhängig voneinander realisierbar und in beliebiger Weise miteinander kombinierbar.

So ist es beispielsweise möglich, dass entsprechend der Darstellung von FIG 1 die Notversorgungseinrichtung 5 mit der Ständerspeisung 3 verbunden ist. In diesem Fall wird die Notversorgungseinrichtung 5 aus der Ständerspeisung 3 gespeist. Die Notversorgungseinrichtung 5 setzt in diesem Fall die Spannung der Ständerspeisung 3 auf die von ihr abgegebene Spannung U' um. Alternativ kann die Notversorgungseinrichtung 5 beispielsweise aus einem anderen ein- oder mehrphasigen Wechselspannungsnetz oder aus einer Batterie gespeist werden.

Wenn die Notversorgungseinrichtung 5 aus der Ständerspeisung 3 gespeist wird, ist es möglich, die Speisung permanent vorzunehmen. Bevorzugt ist jedoch entsprechend der Darstellung von FIG 1, dass die Schalteinrichtung 10 weitere Schaltelemente 16 umfasst, mittels derer die Notversorgungseinrichtung 5 an die Ständerspeisung 3 anschaltbar und von der Ständerspeisung 3 abschaltbar ist. Das An- und Abschalten kann in diesem Fall automatisch in Verbindung mit dem Umschalten vom Normal- in den Notbetrieb und umgekehrt erfolgen. Beim Ausfall der Erregerversorgungseinrichtung 4 wird die Notversorgungseinrichtung 5 also automatisch an die Ständerspeisung 3 angeschaltet. Ebenso wird beim Übergang vom Notbetrieb in den Normalbetrieb automatisch die Notversorgungseinrichtung 5 von der Ständerspeisung 3 abgeschaltet.

Wie bereits erwähnt, ist die Nennspannung des Drehstromnetzes 8 oftmals eine Mittelspannung. Die von der Notversorgungseinrichtung 5 abgegebene Spannung U' beträgt hingegen maximal wenige 100 V. Die Notversorgungseinrichtung 5 weist daher vorzugsweise einen Transformator 17 auf, mittels dessen die Notversorgungseinrichtung 5 die Spannung der Ständerspeisung 3 auf die von der Notversorgungseinrichtung 5 abgegebene Spannung U' umsetzt. Der Transformator 17 ist zu diesem Zweck derart ausgelegt, dass die von der Notversorgungseinrichtung 5 abgegebene Spannung U' zwischen dem Minimalwert U0 und dem Maximalwert U0+ ΔU liegt, es sich also (in Bezug auf die Grö-βe der Spannung) um einen Wert handelt, der auch von der Erregerversorgungseinrichtung 4 in die Erregerwicklung 11 einspeisbar ist. Die genannte Aussage bezieht sich selbstverständlich darauf, dass das Drehstromnetz 8 seine Nennspannung aufweist.

In dem in FIG 1 dargestellten Fall, dass die Erregerwicklung 11 mit Gleichspannung gespeist wird, ist hinter dem Transformator 17 eine Gleichrichtereinrichtung 18 angeordnet, beispielsweise ein Brückengleichrichter.

Die von der Notversorgungseinrichtung 5 abgegebene Spannung U' kann nach Bedarf bemessen sein. Vorzugsweise ist die von der Notversorgungseinrichtung 5 abgegebene Spannung U' derart bemessen, dass sie im oberen Drittel der von der Erregerversorgungseinrichtung 4 in die Erregerwicklung 11 einspeisbaren Spannungen U liegt. Es gilt also vorzugsweise

$$U0 + \frac{2}{3}\Delta U \le U' \le U0 + \Delta U \;.$$

Der Vorteil dieser Ausgestaltung liegt darin, dass die Synchronmaschine 1 auch im Notbetrieb mit relativ hohem Drehmoment betreibbar ist.

Wie bereits erwähnt, erfolgt das Umschalten vom Normalbetrieb in den Notbetrieb automatisch. Es ist möglich, dass auch das Umschalten vom Notbetrieb in den Normalbetrieb automatisch erfolgt. Vorzugsweise wird diese Rückumschaltung jedoch erst durch die Vorgabe eines entsprechenden Schaltbefehls C durch einen Benutzer 19 ausgelöst. In diesem Fall sind gemäß FIG 2 zusätzlich zu den Schritten S1 bis S6 Schritte S7 und S8 vorhanden.

Im Schritt S7 wird über eine Benutzerschnittstelle 20 an den Benutzer 19 eine Meldung M ausgegeben, dass die Stromversorgungseinrichtung 2 zum Umschalten vom Notbetrieb auf den Normalbetrieb bereit ist. Im Schritt S8 wird das Vorgeben des Schaltbefehls C abgewartet.

Die Schritte S7 und S8 sind nur optional. Sie sind daher in FIG 2 nur gestrichelt dargestellt.

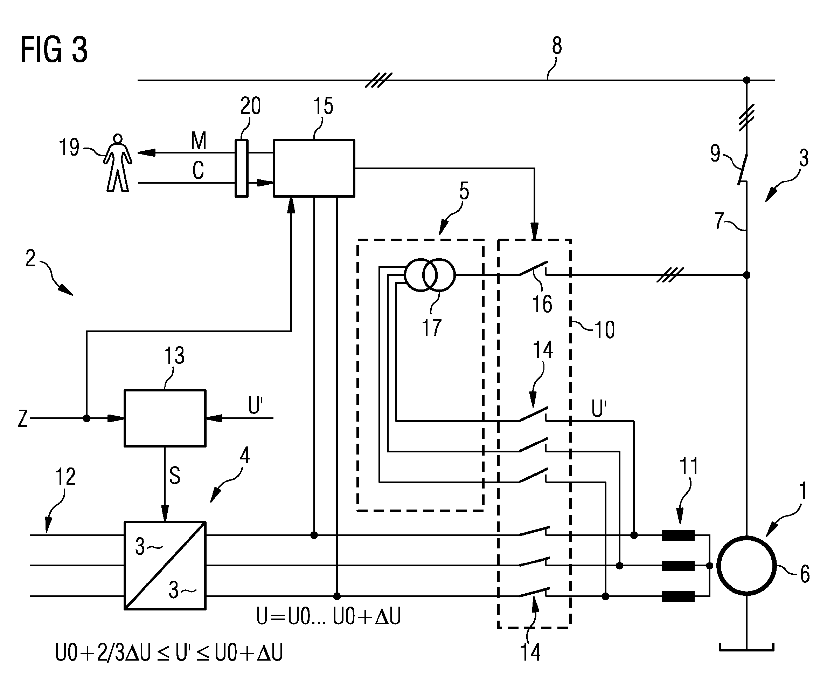

Die vorliegende Erfindung wurde obenstehend in Verbindung mit einer Synchronmaschine 1 erläutert, bei der die Erregerwicklung 11 mit Gleichspannung beaufschlagt wird. Die vorliegende Erfindung ist jedoch ebenso bei einer Synchronmaschine 1 anwendbar, die mit Drehstrom beaufschlagt wird. FIG 3 zeigt eine entsprechende Ausgestaltung der zugehörigen Stromversorgungseinrichtung 2.

Die Ausgestaltung von FIG 3 entspricht im Wesentlichen der von FIG 1. Im Unterschied zu FIG 1 sind jedoch drei Erregerwicklungen 6 vorhanden, die mit Drehstrom gespeist werden. Aus diesem Grund sind selbstverständlich die Erregerversorgungseinrichtung 4 und die Notversorgungseinrichtung 5 derart ausgebildet, dass sie Drehströme abgeben. Weiterhin kann in diesem Fall die Gleichrichtereinrichtung 18 entfallen. Weiterhin muss selbstverständlich die Anzahl an Schaltelementen 14 der Schalteinrichtung 10 entsprechend angepasst werden. Der übrige Aufbau und der Betrieb der Synchronmaschine 1 gemäß FIG 3 sind völlig analog zu den obenstehend in Verbindung mit den FIG 1 und 2 beschriebenen Ausgestaltungen und Betriebsweisen.

Die vorliegende Erfindung weist viele Vorteile auf. Insbesondere ist das Umschalten vom Notbetrieb in den Normalbetrieb ohne Anhalten der Synchronmaschine 1 möglich. Weiterhin wird auf einfache und zuverlässige Weise die Energieversorgung der Erregerwicklung 11 für den Notbetrieb bewirkt.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

**Patentansprüche**

1. Betriebsverfahren für eine fremderregte bürstenlose Synchronmaschine (1),

   - wobei sowohl in einem Normalbetrieb als auch in einem Notbetrieb der Synchronmaschine (1) in eine Ständerwicklung (6) der Synchronmaschine (1) über eine Ständerspeisung (3) elektrische Energie eingespeist wird,
   - wobei im Normalbetrieb in eine Erregerwicklung (11) der Synchronmaschine (1) über eine von einer Steuereinrichtung (13) gesteuerte Erregerversorgungseinrichtung (4) elektrische Energie eingespeist wird,
   - wobei bei einem Ausfall der Erregerversorgungseinrichtung (4) mittels einer Schalteinrichtung (10) automatisch die Erregerversorgungseinrichtung (4) von der Erregerwicklung (11) abgeschaltet wird und zur Aufrechterhaltung des Notbetriebs eine Notversorgungseinrichtung (5) an die Erregerwicklung (11) angeschaltet wird, von der ungesteuert elektrische Energie in die Erregerwicklung (11) eingespeist wird,

   **dadurch gekennzeichnet, dass** zum Übergang vom Notbetrieb in den Normalbetrieb während des Einspeisens der elektrischen Energie in die Ständerwicklung (6) zunächst von der Steuereinrichtung (13) die Erregerversorgungseinrichtung (4) entsprechend der Einspeisung der Notversorgungseinrichtung (5) angesteuert wird und sodann mittels der Schalteinrichtung (10) die Notversorgungseinrichtung (5) von der Erregerwicklung (11) abgeschaltet wird und die Erregerversorgungseinrichtung (4) an die Erregerwicklung (11) angeschaltet wird.

2. Betriebsverfahren nach Anspruch 1, **dadurch gekennzeichnet, dass** die Notversorgungseinrichtung (5) aus der Ständerspeisung (3) gespeist wird und die Spannung der Ständerspeisung (3) auf eine von der Erregerversorgungseinrichtung (4) in die Erregerwicklung (11) einspeisbare Spannung (U') umsetzt.

3. Betriebsverfahren nach Anspruch 2, **dadurch gekennzeichnet, dass** die Notversorgungseinrichtung (5) beim Ausfall der Erregerversorgungseinrichtung (4) automatisch an die Ständerspeisung (3) angeschaltet wird und beim Übergang vom Notbetrieb in den Normalbetrieb automatisch von der Ständerspeisung (3) abgeschaltet wird.

4. Betriebsverfahren nach Anspruch 2 oder 3, **dadurch gekennzeichnet, dass** die Notversorgungseinrichtung (5) die Spannung der Ständerspeisung (3) mittels eines Transformators (17) auf die von der Erregerversorgungseinrichtung (4) in die Erregerwicklung (11) einspeisbare Spannung (U') umsetzt.

5. Betriebsverfahren nach einem der obigen Ansprüche, **dadurch gekennzeichnet, dass** das Umschalten vom Notbetrieb in den Normalbetrieb von einem Benutzer (19) durch die Eingabe eines entsprechenden Schaltbefehls (C) ausgelöst wird.

6. Betriebsverfahren nach einem der obigen Ansprüche, **dadurch gekennzeichnet, dass** die von der Notversorgungseinrichtung (5) abgegebene Spannung (U') im oberen Drittel der von der Erregerversorgungseinrichtung (4) in die Erregerwicklung (11) einspeisbaren Spannungen (U) liegt.

7. Stromversorgungseinrichtung für eine fremderregte bürstenlose Synchronmaschine (1),

- wobei die Stromversorgungseinrichtung eine Ständerspeisung (3) aufweist, die zum Einspeisen von elektrischer Energie in eine Ständerwicklung (6) der Synchronmaschine (1) an die Ständerwicklung (6) anschaltbar ist,
- wobei die Stromversorgungseinrichtung eine Erregerversorgungseinrichtung (4) aufweist, die zum Einspeisen von elektrischer Energie in eine Erregerwicklung (11) der Synchronmaschine (1) über eine Schalteinrichtung (10) an die Erregerwicklung (11) anschaltbar ist,
- wobei die Stromversorgungseinrichtung eine Notversorgungseinrichtung (5) aufweist, die zum Einspeisen von elektrischer Energie in die Erregerwicklung (11) über die Schalteinrichtung (10) an die Erregerwicklung (11) anschaltbar ist,
- wobei der Erregerversorgungseinrichtung (4) zu deren Steuerung eine Steuereinrichtung (13) zugeordnet ist und der Notversorgungseinrichtung (5) keine Steuereinrichtung zugeordnet ist,
- wobei die Schalteinrichtung (10) derart ausgebildet ist, dass sie bei einem Ausfall der Erregerversorgungseinrichtung (4) automatisch die Erregerversorgungseinrichtung (4) von der Erregerwicklung (11) abschaltet und zur Aufrechterhaltung eines Notbetriebs der Synchronmaschine (1) die Notversorgungseinrichtung (5) an die Erregerwicklung (11) anschaltet,

**dadurch gekennzeichnet,**

- **dass** die Steuereinrichtung (13) derart ausgebildet ist, dass sie im Notbetrieb während des Einspeisens der elektrischen Energie in die Ständerwicklung (6) zunächst die Erregerversorgungseinrichtung (4) entsprechend der Einspeisung der Notversorgungseinrichtung (5) ansteuert, und
- **dass** die Schalteinrichtung (10) derart ausgebildet ist, dass sie sodann die Notversorgungseinrichtung (5) von der Erregerwicklung (11) abschaltet und die Erregerversorgungseinrichtung (4) an die Erregerwicklung (11) anschaltet.

8. Stromversorgungseinrichtung nach Anspruch 7, **dadurch gekennzeichnet, dass** die Notversorgungseinrichtung (5) mit der Ständerspeisung (3) verbunden ist und die Spannung der Ständerspeisung (3) auf eine von der Erregerversorgungseinrichtung (4) in die Erregerwicklung (11) einspeisbare Spannung (U') umsetzt.

9. Stromversorgungseinrichtung nach Anspruch 8, **dadurch gekennzeichnet, dass** die Schalteinrichtung (10) derart ausgebildet ist, dass sie die Notversorgungseinrichtung (5) in Verbindung mit dem Anschalten der Notversorgungseinrichtung (5) an die Erregerwicklung (11) automatisch an die Ständerspeisung (3) anschaltet und in Verbindung mit dem Abschalten der Notversorgungseinrichtung (5) von der Erregerwicklung (11) automatisch von der Ständerspeisung (3) abschaltet.

10. Stromversorgungseinrichtung nach Anspruch 8 oder 9, **dadurch gekennzeichnet, dass** die Notversorgungseinrichtung (5) zum Umsetzen der Spannung der Ständerspeisung (3) auf die von der Erregerversorgungseinrichtung (4) in die Erregerwicklung (11) einspeisbare Spannung (U') einen Transformator (17) aufweist.

11. Stromversorgungseinrichtung nach einem der Ansprüche 7 bis 10,
**dadurch gekennzeichnet, dass** ihr eine Benutzerschnittstelle (20) zum Anzeigen der Bereitschaft des Anschaltens der Erregerversorgungseinrichtung (4) an die Erregerwicklung (11) an einen Benutzer (19) und zum Entgegennehmen eines entsprechenden Schaltbefehls (C) vom Benutzer (19) zugeordnet ist.

12. Stromversorgungseinrichtung nach einem der Ansprüche 7 bis 11,
**dadurch gekennzeichnet, dass** die von der Notversorgungseinrichtung (5) abgegebene Spannung (U') im oberen Drittel der von der Erregerversorgungseinrichtung (4) in die Erregerwicklung (11) einspeisbaren Spannungen (U) liegt.

FIG 1

$U = U0 \ldots U0 + \Delta U$

$U0 + 2/3\Delta U \leq U' \leq U0 + \Delta U$

EP 2 385 620 A2

# FIG 2

S1
Ausfall Läuferversorgungs-einrichtung?

S2
behalte Normalbetrieb bei

−

+

schalte die Läuferversorgungseinrichtung von der Läuferwicklung ab
schalte die Notversorgungseinrichtung an die Läuferwicklung an —S3

S4
Bereitschaft zum Übergang vom Notbetrieb in den Normalbetrieb?

−

+

gib über eine Benutzerschnittstelle an einen Benutzer eine Meldung aus, dass die Bereitschaft zum Übergang in den Normalbetrieb besteht —S7

S8
Vorgeben des Umschaltbefehls?

−

+

steuere die Läuferversorgungseinrichtung an, so dass die Läuferversorgungseinrichtung entsprechend der Einspeisung der Notversorgungseinrichtung angesteuert wird —S5

schalte die Notversorgungseinrichtung von der Läuferwicklung ab
schalte die Läuferversorgungseinrichtung an die Läuferwicklung an
(gehe in Normalbetrieb über) —S6

# FIG 3

EP 2 385 620 A2

$$U = U0 \dots U0 + \Delta U$$

$$U0 + 2/3\Delta U \leq U' \leq U0 + \Delta U$$